# FASCICULE DE BREVET EUROPEEN

(11) **EP 2 451 038 B1**
(45) Date de publication et mention de la délivrance du brevet: **03.12.2014**
(21) Numéro de dépôt: 10306227.9
(22) Date de dépôt: 08.11.2010
(51) Int. Cl.: H02G 3/04, H02G 11/00

(54) **Dispositif de passage de câbles modulable pour porte ou fenêtre**
Modulierbare Kabelführungsvorrichtung für Tür oder Fenster
Modular cable-entry device for a door or window

(43) Date de publication de la demande: 09.05.2012
(73) Titulaire: Sewosy, Société Par Actions Simplifiée, 67170 Bernolsheim (FR)
(72) Inventeur: Meynet, Gaël, F-67170 Bilwisheim (FR)
(74) Mandataire: Nuss, Laurent

(56) Documents cités:
- WO-A2-2006/052747
- FR-A1- 2 893 457
- GB-A- 2 450 922
- US-A- 4 445 299

## Description

La présente invention concerne le domaine de la protection des câbles électriques entre le dormant et l'ouvrant d'une porte ou fenêtre fermant une ouverture dans un bâtiment ou édifice et a pour objet un dispositif de passage de câbles modulable pour porte ou fenêtre.

On connaît déjà des systèmes de passage de câbles, montés en appliques ou encastrés, qui permettent de protéger et de camoufler les câbles électriques assurant la transmission du courant électrique dans une porte ou une fenêtre entre le dormant et l'ouvrant monté pivotant par l'un de ses côtés grâce à des paumelles sur ce dernier, ce en vue d'alimenter, par exemple, des serrures électriques pour les portes ou des rideaux ou volets électriques pour les fenêtres.

Les systèmes de passage de câbles en applique comprennent, d'une part, un flexible ou une gaine tubulaire traversé par les câbles électriques et deux embouts de fixation montés fixement à chacune des extrémités libres du flexible et étant susceptibles d'être fixés respectivement sur l'ouvrant, notamment du côté paumelles, ou sur le dormant.

Un tel système est connu, par exemple, du document US-A-4445299.

Cependant, ces systèmes de passage de câbles en applique sont apparents et sont facilement accessibles en cas d'effraction de la porte ou de la fenêtre, notamment en vue de la neutralisation d'une serrure électrique ou d'une commande électrique de l'ouverture/fermeture des volets. En outre il arrive fréquemment que ces flexibles soient écrasés ou pincés lors de la fermeture de la porte entre l'ouvrant et le dormant.

Pour remédier à ces problèmes on a proposé d'utiliser des flexibles, tels que des ressorts hélicoïdaux, possédant des propriétés de résistance contre l'écrasement ou le pincement et il a été mis au point des systèmes de passages de câbles dits invisibles, c'est à dire que, dans chacun de ces systèmes, le flexible est susceptible d'être encastré dans le dormant d'une porte pivotante, notamment du côté paumelles lors de la fermeture de la porte. Ces systèmes dits invisibles utilisant des flexibles anti-écrasements et rendant invisibles et inaccessibles ces derniers à la fermeture de la porte garantissent alors une protection des câbles contre leur destruction ou leur détérioration intentionnelle ou contre leur écrasement ou leur pincement.

Un tel passage de câbles encastrable est constitué par un boîtier allongé destiné à être encastré dans le dormant, côté paumelles, et présentant généralement une forme parallélépipédique rectangle, ledit boîtier étant ouvert sur l'un des côtés longitudinaux pour recevoir et dissimuler le flexible en position de fermeture de la porte, lequel flexible, généralement du type anti-écrasement, est fixé par l'une de ses extrémités, par l'intermédiaire d'un embout de fixation dans le boîtier et par son autre extrémité, par l'intermédiaire d'un second embout, sur l'ouvrant. Le flexible est alors susceptible de sortir du boîtier encastré dans le dormant en position d'ouverture de la porte et de rentrer automatiquement dans le boîtier en position de fermeture de cette dernière.

Toutefois, les flexibles doivent avoir une longueur adaptée en fonction de la porte ou de la fenêtre, ce qui nécessite pour l'opérateur d'avoir plusieurs boîtiers de longueurs différentes.

La présente invention a pour but de pallier ces inconvénients, en proposant un dispositif de passage de câbles modulable apte à s'adapter en fonction de la longueur du flexible à installer.

A cet effet, la présente invention a pour objet un dispositif de passage de câbles modulable pour porte ou fenêtre comprenant au moins un ouvrant monté pivotant sur un dormant, ledit dispositif comprenant un boîtier apte à être encastré et fixé dans une cavité pratiquée dans le dormant et un flexible de protection, de préférence du type anti-écrasement ou anti-pincement, des câbles électriques, susceptible de venir se loger, à la fermeture de l'ouvrant, dans ledit boîtier encastré par l'un de ses côtés longitudinaux ouvert, ledit flexible étant inséré ou emmanché à chacune de ses extrémités dans un embout de fixation creux permettant la fixation dudit flexible respectivement dans le boîtier et sur l'ouvrant, et se caractérise essentiellement en ce que le boîtier est constitué par deux parties de boîtier, à savoir une partie de boîtier mâle et une partie de boîtier femelle, aptes à être emboîtées longitudinalement l'une dans l'autre, en étant montées coulissantes axialement, grâce des moyens de glissement, l'une par rapport à l'autre, ce de sorte à pouvoir régler la longueur du boîtier en fonction de la longueur du flexible à recevoir.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

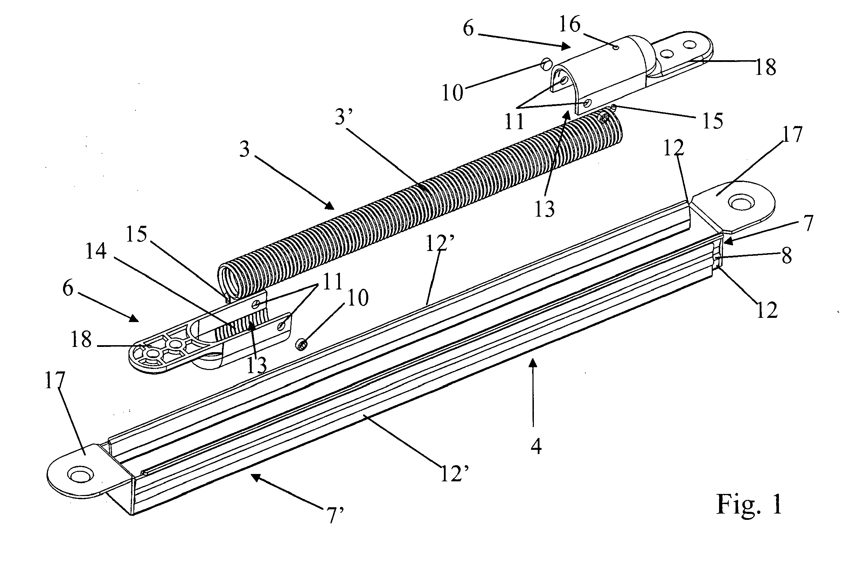

- la figure 1 est une vue en perspective et en éclatée d'un dispositif de passage de câbles modulable selon la présente invention,
- la figure 2 est une vue en perspective du dispositif représenté sur la figure 1, à l'état monté et dans une configuration courte et rétractée,
- la figure 3 est une vue en perspective du dispositif représente sur la figure 1, à l'état monté et dans une configuration longue et déployée,
- la figure 4 est une vue en perspective du dispositif de passage de câbles représenté sur la figure 1 monté dans une cavité pratiquée dans un dormant de porte avec ouvrant pivotant.

Les figures montrent un dispositif de passage de câbles modulable, selon la présente invention, pour porte ou fenêtre comprenant au moins un ouvrant 1 monté pivotant sur un dormant 2, comprenant un boîtier 4 apte à être encastré et fixé dans une cavité 5 pratiquée dans le dormant 2 et un flexible 3 de protection des câbles électriques susceptible de venir se loger, à la fermeture de l'ouvrant 1, dans ledit boîtier 4 encastré par l'un de ses côtés longitudinaux ouvert, ledit flexible 3 étant inséré ou emmanché à chacune de ses extrémités dans un embout 6 de fixation creux permettant la fixation dudit flexible 3 respectivement dans le boîtier 4 et sur l'ouvrant 1.

Conformément à la présente invention, le boîtier 4 est constitué par deux parties de boîtier 7 et 7', à savoir une partie de boîtier mâle 7 et une partie de boîtier femelle 7', aptes à être emboîtées longitudinalement l'une dans l'autre, en étant montées coulissantes axialement, grâce des moyens de glissement 8, 9, l'une par rapport à l'autre, ce de sorte à pouvoir régler la longueur du boîtier 4 en fonction de la longueur du flexible 3 à recevoir.

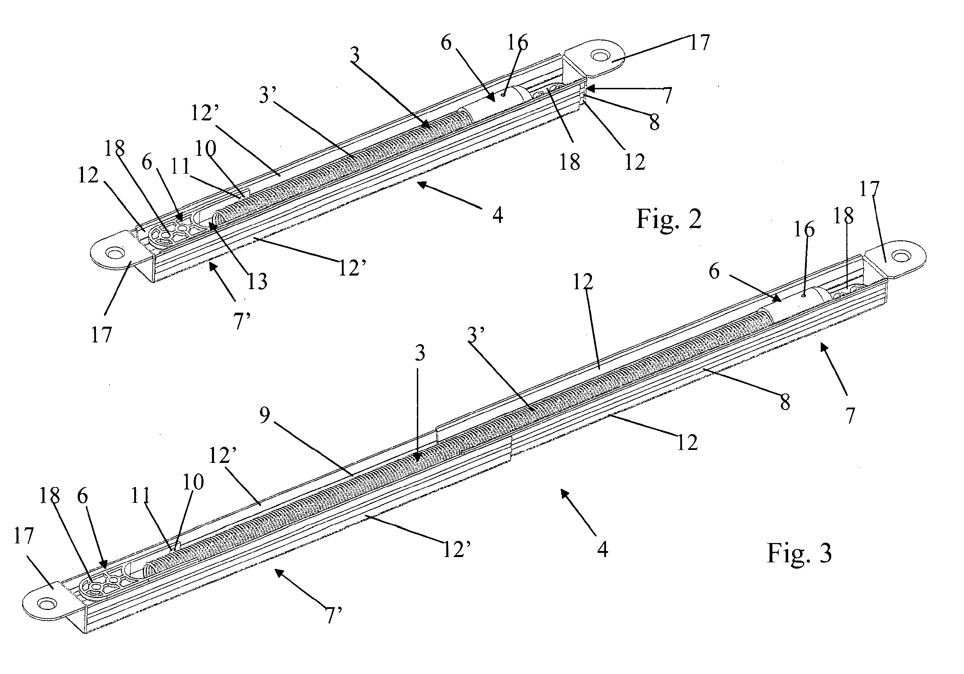

De préférence, le flexible 3 peut être fixé dans le boîtier 4 dans la partie de boîtier mâle 7, de préférence à proximité de l'une de ses extrémités (figures 2 à 4).

D'autre part, chaque embout 6 peut avantageusement être monté de façon amovible sur l'extrémité concernée du flexible 3 grâce à des moyens de fixation amovibles 10.

Chaque partie de boîtier mâle 7, respectivement femelle 7', peut présenter globalement une forme parallélépipédique rectangle comportant deux côtés longitudinaux opposés et parallèles entre eux, dont l'un est fermé et forme le fond de la partie de boîtier mâle 7, respectivement femelle 7', et l'autre est ouvert pour permettre la réception du flexible 3 dans le boîtier 4, deux côtés latéraux de guidage et de glissement 12, respectivement 12', opposés et parallèles entre eux s'étendant parallèlement à l'axe longitudinal du boîtier 4 et perpendiculairement auxdits côtés longitudinaux et deux côtés d'extrémité perpendiculaires audit axe.

L'un des côtés d'extrémité de la partie de boîtier femelle 7' peut être ouvert de sorte à permettre le coulissement axial de la partie de boîtier mâle 7 dans la partie de boîtier femelle 7'. En outre, la face externe de chaque côté latéral de guidage et de glissement 12 de la partie de boîtier mâle 7 peut comporter des premiers moyens de guidage et de glissement 8 et la face interne de chaque côté latéral de guidage et de glissement 12' de la partie de boîtier femelle 7' peut comporter des seconds moyens de guidage et de glissement 9 aptes à coopérer avec lesdits premiers moyens de guidage et de glissement 8 correspondants pour permettre le coulissement par glissement de la partie de boîtier mâle 7 dans la partie de boîtier femelle 7'.

Les premiers moyens de guidage et de glissement 8 peuvent consister, par exemple et de préférence, en une nervure, le cas échéant en une rainure, pratiquée longitudinalement dans la face externe du côté latéral de guidage et de glissement 12 correspondant de la partie de boîtier mâle 7 et les seconds moyens de guidage et de glissement 9 peuvent consister en une rainure, le cas échéant en une nervure, pratiquée longitudinalement dans la face interne du côté latéral de guidage et de glissement 12' correspondant de la partie de boîtier femelle 7'.

On comprendra que la coopération entre une nervure de guidage et de glissement et une rainure de guidage et de glissement signifie le coulissement de chaque nervure dans la rainure correspondante parallèlement à l'axe du boîtier 4.

De préférence, le flexible peut être soit un ressort hélicoïdal 3, soit une gaine tubulaire, non représentée, de préférence annelée sur sa surface externe, métallique ou en matière plastique.

Dans un mode de réalisation préférentiel de la présente invention, chaque embout 6 creux peut être délimité intérieurement par une paroi conformée pour retenir au moins latéralement l'extrémité concernée du flexible 3 dans ce dernier et les moyens de fixation amovibles de ladite extrémité dans l'embout 6 correspondant peuvent consister, pour chaque embout 6, en au moins une vis 10 et au moins un orifice 11 traversant la paroi de l'embout 6 correspondant de sorte que chaque vis 10 soit susceptible d'être vissée dans l'orifice 11 ou l'un des orifices 11 de l'embout 6 correspondant en effectuant, par son extrémité libre, une pression de serrage, et/ou de blocage en traction du flexible 3, contre la surface externe de l'extrémité concernée du flexible 3 insérée dans l'embout 6 correspondant.

Chaque embout de fixation 6, d'une part, peut présenter globalement la forme d'une demi coque allongée ouverte à au moins l'une de ses extrémités pour permettre le passage du flexible 3 et qui peut avantageusement comporter une ouverture longitudinale de réception 13 permettant d'insérer ou d'emmancher, au moins dans une direction transversale, l'une des extrémités du flexible 3 dans l'embout 6 correspondant.

En outre, chaque embout 6 peut comporter des moyens de pré-positionnement 3', 14 permettant essentiellement de pré positionner l'extrémité correspondante du flexible dans l'embout 6 concerné et des moyens de blocage 10 et/ou 15 amovibles permettant de bloquer en traction l'extrémité correspondante du flexible 3 dans l'embout 6 concerné.

Dans une forme de réalisation préférentielle des moyens de pré-positionnement 14, le flexible 3 peut être un ressort hélicoïdal, le cas échéant une gaine tubulaire annelée, c'est-à-dire comportant une surface externe spiralée 3', le cas échéant annelée, et la paroi interne de chaque embout 6 peut comprendre, au moins en partie, une empreinte 14 complémentaire de la surface externe 3', spiralée ou annelée, du flexible 3 apte à coopérer, à l'état d'insertion de l'extrémité correspondante du flexible 3 dans l'embout 6 concerné, avec la surface externe 3' du flexible 3, de sorte à permettre essentiellement le pré-positionnement de l'extrémité correspondante du flexible 3 dans l'embout 6 concerné et, éventuellement, de renforcer le maintien avec blocage en traction du flexible 3 dans ledit embout 6.

Ainsi, dans le cas où le flexible est un ressort hélicoïdal 3, ou le cas échéant une gaine tubulaire annelée, l'extrémité de la ou de chaque vis 10 peut être avantageusement apte, en formant par exemple une pointe, à venir s'insérer, lors du vissage dans l'orifice 11 ou l'un des orifices 11 de l'embout de fixation 6 concerné, entre deux spires de l'extrémité correspondante dudit ressort 3, le cas échéant entre deux anneaux de l'extrémité correspondante de ladite gaine tubulaire annelée, pré-positionnée à cet effet dans l'embout 6 correspondant grâce aux moyens de pré-positionnement 3', 14, avec pour effet le maintien avec blocage en traction de l'extrémité correspondante du flexible 3 dans l'embout 6 concerné.

D'autre part, dans le cas où le flexible est un ressort hélicoïdal 3, qui est constitué par nature par un fil métallique enroulé en hélice, celui-ci peut avantageusement se terminer à chacune des extrémités de l'enroulement par une partie de fil d'extrémité 15, ou extrémité d'accrochage, coudée, de préférence sensiblement en angle droit, apte à venir s'engager et s'accrocher dans une ouverture 16 ou une encoche pratiquée dans la face interne de l'embout 6 correspondant, de sorte à former un point d'accrochage amovible et de blocage en traction du flexible 3 dans ledit embout.

Un tel pré-positionnement de chaque extrémité concernée du flexible 3, spiralé ou annelé, dans l'empreinte 14 complémentaire correspondante permet de placer axialement et longitudinalement chaque extrémité du flexible 3 dans l'embout 6 correspondant de sorte à pouvoir amener, aisément et précisément, l'extrémité de la ou de chaque vis 10 vissée dans la paroi dudit embout 6 entre deux spires ou deux anneaux du flexible 3 et/ou, le cas échéant, de pouvoir engager aisément et précisément chaque extrémité d'accrochage 15 du ressort 3 dans l'ouverture 16 ou l'encoche de l'embout 6 correspondant.

On comprendra que l'ouverture longitudinale de réception 13 permet avantageusement de faciliter l'insertion ou l'emmanchement de chaque extrémité du flexible 3 dans l'embout 6 correspondant afin de placer la surface externe spiralée, le cas échéant annelée, dans l'empreinte 14 complémentaire de pré-positionnement et/ou de permettre l'accrochage de l'extrémité d'accrochage 15 dans l'ouverture 16 correspondante.

La présente invention permet ainsi, grâce aux moyens de blocage 10 et/ou 15 d'assurer un blocage et un verrouillage efficace de chaque extrémité de flexible 3 dans l'embout 6 correspondant. Un tel blocage avec verrouillage est renforcé dans le cas où la présente invention prévoit la présence des deux types de moyens de blocage 10 et 15 associés à la forme particulière du flexible 3, du type ressort hélicoïdal, à savoir d'une part, la ou les vis 10 de blocage venant s'insérer chacune entre deux spires de ce dernier et, d'autre part, les extrémités d'accrochage 15 du ressort hélicoïdal formant le flexible 3, venant s'engager et s'accrocher chacune dans une ouverture ou une encoche de l'embout 6 correspondant.

De préférence, chaque embout 6 peut comporter deux orifices 11, aptes chacun à recevoir une vis de fixation 10, placés diamétralement l'un par rapport à l'autre sur un axe perpendiculaire à l'axe longitudinal de l'embout 6 en forme de demi-coque allongée, de préférence à proximité de son extrémité ouverte recevant axialement l'extrémité correspondante du flexible 3. En outre, le ou chaque orifice 11 peut être situé entre l'ouverture de réception longitudinal 13 et l'empreinte 14 pratiquée alors, au moins partiellement, dans le fond de l'embout 6 correspondant, sur tout ou partie de sa longueur. De préférence le ou chaque orifice 11 peut être situé entre l'axe du flexible 3, lorsque celui-ci est inséré ou emmanché par l'une de ses extrémités dans l'embout 6 correspondant, et l'ouverture longitudinal de réception 13 de ce dernier, ce de façon à renforcer le maintien, notamment transversal, du flexible 3 dans l'embout 6 correspondant en forme de demi-coque.

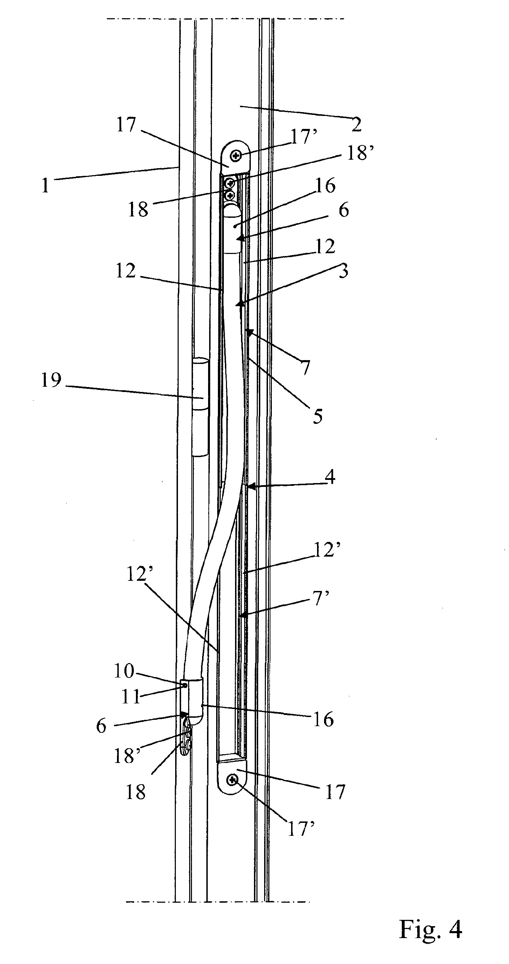

Par ailleurs, chaque embout 6 peut avantageusement comporter une patte de fixation 18 permettant, pour l'un des embouts 6 montés à l'une des extrémités du flexible 3, sa fixation sur l'ouvrant 1, par exemple par l'intermédiaire de vis 18', de la porte concernée et, pour l'autre embout 6 monté à l'autre extrémité du flexible 3, sa fixation dans le boîtier 4, par exemple par l'intermédiaire de vis 18' (figure 4) pouvant avantageusement être identiques aux vis 18' permettant sa fixation sur l'ouvrant 1.

Enfin, on peut voir que le boîtier 4 se prolonge à chacune de ses extrémités par un oeillet 17 permettant sa fixation, par exemple par l'intermédiaire de vis 17', sur les bords d'extrémité de la cavité 5 du dormant 2.

Ainsi, le dispositif de passage de câbles selon la présente invention permet de moduler aisément la longueur du boîtier 4, destiné à être encastré dans une cavité 5 pratiquée dans le dormant 2 d'une porte, plus particulièrement du côté des paumelles 19, pour l'adapter à la longueur plus ou moins grande du flexible 3 à utiliser en vue de protéger les câbles électriques entre le dormant 2 et l'ouvrant 1. En outre, la présente invention permet également, grâce aux embouts 6 amovibles, d'effectuer uniquement un changement de flexible 3 en conservant les embouts 6 existants.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de passage de câbles modulable pour porte ou fenêtre comprenant au moins un ouvrant (1) monté pivotant sur un dormant (2), ledit dispositif comprenant un boîtier (4) apte à être encastré et fixé dans une cavité (5) pratiquée dans le dormant (2) et un flexible (3), de préférence du type anti-écrasement ou anti-pincement, de protection des câbles électriques susceptible de venir se loger, à la fermeture de l'ouvrant (1), dans ledit boîtier (4) encastré par l'un de ses côtés longitudinaux ouvert, ledit flexible (3) étant inséré ou emmanché à chacune de ses extrémités dans un embout (6) de fixation creux permettant la fixation dudit flexible (3) respectivement dans le boîtier (4) et sur l'ouvrant (1),
dispositif, **caractérisé en ce que** le boîtier (4) est constitué par deux parties de boîtier (7) et (7'), à savoir une partie de boîtier mâle (7) et une partie de boîtier femelle (7'), aptes à être emboîtées longitudinalement l'une dans l'autre, en étant montées coulissantes axialement, grâce des moyens de glissement (8, 9), l'une par rapport à l'autre, ce de sorte à pouvoir régler la longueur du boîtier (4) en fonction de la longueur du flexible (3) à recevoir.

2. Dispositif, selon la revendication 1, **caractérisé en ce que** le flexible (3) est fixé dans le boîtier (4) dans la partie de boîtier mâle (7), de préférence à proximité de l'une de ses extrémités.

3. Dispositif, selon l'une quelconque des revendications 1 à 2, **caractérisé en ce que** le flexible consiste soit en un ressort hélicoïdal (3), soit en une gaine tubulaire, de préférence annelée sur sa surface externe, métallique ou en matière plastique.

4. Dispositif, selon l'une quelconque des revendications 1 à 3, **caractérisé en ce que** chaque partie de boîtier mâle (7), respectivement femelle (7'), présente globalement une forme parallélépipédique rectangle comportant deux côtés longitudinaux opposés et parallèles entre eux, dont l'un est fermé et forme le fond de la partie de boîtier mâle (7), respectivement femelle (7'), et l'autre est ouvert pour permettre la réception du flexible (3) dans le boîtier (4), deux côtés latéraux de guidage et de glissement opposés et parallèles entre eux s'étendant parallèlement à l'axe longitudinal du boîtier (4) et perpendiculairement auxdits côtés longitudinaux (12), respectivement (12'), et deux côtés d'extrémité perpendiculaires audit axe et **en ce que** l'un des côtés d'extrémité de la partie de boîtier femelle (7') est ouvert de sorte à permettre le coulissement de la partie de boîtier mâle (7) dans la partie de boîtier femelle (7'), la face externe de chaque côté latéral de guidage et de glissement (12) de la partie de boîtier mâle (7) comportant des premiers moyens de guidage et de glissement (8) et la face interne de chaque côté latéral de guidage et de glissement (12') de la partie de boîtier femelle (7') comportant des seconds moyens de guidage et de glissement (9) aptes à coopérer avec lesdits premiers moyens de guidage et de glissement (8) correspondants.

5. Dispositif, selon la revendication 4, **caractérisé en ce que** les premiers moyens de guidage et de glissement (8) consistent en une nervure, le cas échéant en une rainure, pratiquée longitudinalement dans la face externe du côté latéral de guidage et de glissement (12) correspondant de la partie de boîtier mâle (7) et **en ce que** les seconds moyens de guidage et de glissement (9) consistent en une rainure, le cas échéant en une nervure, pratiquée longitudinalement dans la face interne du côté latéral de guidage et de glissement (12') correspondant de la partie de boîtier femelle (7').

6. Dispositif, selon l'une quelconque des revendications 1 à 5 **caractérisé en ce que** chaque embout (6) est monté de façon amovible sur l'extrémité concernée du flexible (3) grâce à des moyens de fixation amovibles (10).

7. Dispositif, selon la revendication 6, **caractérisé en ce que** chaque embout (6) creux est délimité intérieurement par une paroi retenant au moins latéralement l'extrémité concernée du flexible (3) dans ce dernier et **en ce que** les moyens de fixation amovibles de ladite extrémité dans l'embout (6) correspondant consistent, pour chaque embout (6), en au moins une vis (10) et au moins un orifice (11) traversant la paroi de l'embout (6) correspondant de sorte que chaque vis (10) soit susceptible d'être vissée dans l'orifice (11) ou l'un des orifices (11) de l'embout (6) correspondant en effectuant, par son extrémité libre, une pression de serrage, et/ou de blocage en traction du flexible (3), contre la surface externe de l'extrémité concernée du flexible (3) insérée ou emmanché dans l'embout (6) correspondant.

8. Dispositif, selon la revendication 7, **caractérisé en ce que** chaque embout (6), d'une part, présente globalement la forme d'une demi coque allongée ouverte à au moins l'une de ses extrémités pour permettre le passage du flexible (3) et comportant une ouverture longitudinale de réception (13) permettant d'insérer ou d'emmancher, au moins dans une direction transversale, l'une des extrémités du flexible (3) dans l'embout (6) correspondant.

9. Dispositif, selon la revendication 8, **caractérisé en ce que** chaque embout (6) comporte en outre des moyens de pré-positionnement (14) permettant essentiellement de pré positionner l'extrémité correspondante du flexible (3) dans l'embout (6) concerné et/ou des moyens de blocage (10) et/ou (15) amovibles permettant de bloquer en traction l'extrémité correspondante du flexible (3) dans l'embout (6) concerné.

10. Dispositif, selon la revendication 9, **caractérisé en ce que** le flexible est un ressort hélicoïdal (3) ou, le cas échéant, une gaine tubulaire annelée, c'est-à-dire comportant une surface externe spiralée (3'), le cas échéant annelée, et **en ce que** la paroi interne de chaque embout de fixation (6) comprend, au moins en partie, une empreinte (14), complémentaire de la surface externe (3'), spiralée ou annelée, du flexible (3), apte à coopérer, à l'état d'insertion, avec ladite surface externe (3') de sorte à permettre essentiellement le pré-positionnement de l'extrémité correspondante du flexible (3) dans l'embout (6) concerné et, éventuellement, de renforcer le maintien avec blocage en traction du flexible (3) dans ledit embout (6).

11. Dispositif, selon la revendication 10, **caractérisé en ce que** l'extrémité de la ou de chaque vis (10), est apte, en formant par exemple une pointe, à venir s'insérer, lors du vissage dans l'orifice (11) ou l'un des orifices (11) de l'embout (6) concerné, entre deux spires de la surface spiralée externe (3') de l'extrémité correspondante dudit ressort (3), le cas échéant entre deux anneaux de la surface externe annelée de l'extrémité correspondante de ladite gaine tubulaire annelée, pré-positionnée à cet effet dans l'embout (6) correspondant, avec pour effet le maintien avec blocage en traction de l'extrémité correspondante du flexible (3) dans l'embout (6) concerné.

12. Dispositif, selon l'une quelconque des revendications 10 à 11, **caractérisé en ce que** le ressort hélicoïdal (3) est constitué par un fil métallique enroulé en hélice et se terminant à chacune des extrémités de l'enroulement par une partie de fil d'extrémité (15), ou extrémité d'accrochage, coudée, de préférence sensiblement en angle droit, apte à venir s'engager et s'accrocher dans une ouverture (16) ou une encoche pratiquée à cet effet dans la face interne de l'embout (6) correspondant, de sorte à former un point d'accrochage et de blocage en traction du flexible (3) dans ledit embout (6).

## Patentansprüche

1. Anpassbare Kabelführungsvorrichtung für eine Tür oder ein Fenster, die bzw. das zumindest einen Flügel (1) umfasst, der schwenkbar an einem Rahmen (2) befestigt ist, wobei die Vorrichtung ein Gehäuse (4), das zum Einbau und Befestigung in einen Hohlraum (5) ausgebildet ist, der in dem Rahmen (2) ausgebildet ist, und ein flexibles Element (3) umfasst, das vorzugsweise vom Knickschutz- oder Klemmschutztyp für elektrische Kabel ist, und das beim Schließen des Flügels (1) in dem eingebauten Gehäuse (4) über dessen eine offene Längsseite untergebracht werden kann, wobei das flexible Element (3) an jedem seiner Enden in ein hohles Befestigungsstück (6) eingesetzt oder eingeklemmt ist, das die Befestigung des flexiblen Elementes (3) an dem Gehäuse (4) bzw. im Flügel (1) ermöglicht,
wobei die Vorrichtung **dadurch gekennzeichnet ist, dass** das Gehäuse (4) durch zwei Gehäuseteile (7) und (7') gebildet ist, d.h. einen Gehäuse-Steckteil (7) und einen Gehäuse-Buchsenteil (7'), die in Längsrichtung ineinander einsetzbar und in Achsrichtung mit Hilfe von Gleiteinrichtungen (8, 9) gegeneinander gleitend befestigt sind, derart, dass die Länge des Gehäuses (4) in Abhängigkeit von der Länge des flexiblen Elementes (3) einstellbar ist, das aufzunehmen ist.

2. Vorrichtung nach Anspruch 1, **dadurch gekennzeichnet, dass** das flexible Element (3) in dem Gehäuse (4) in dem Gehäuse-Steckteil (7) befestigt ist, vorzugsweise in der Nähe eines seiner Enden.

3. Vorrichtung nach einem der Ansprüche 1 bis 2, **dadurch gekennzeichnet, dass** das flexible Element aus einer Schraubenfeder (3) oder einer schlauchförmigen, vorzugsweise an ihrer Außenoberfläche gewellten, Hülle aus Metall oder Kunststoff besteht.

4. Vorrichtung nach einem der Ansprüche 1 bis 3, **dadurch gekennzeichnet, dass** jeder Gehäuse-Steckteil (7) bzw. Gehäuse-Buchsenteil (7') allgemein eine rechtwinklige Parallelepiped-Form aufweist, die zwei einander gegenüberliegende und zueinander parallele Längsseiten, von denen die eine verschlossen ist und den Boden des Gehäuse-Steckteils (7) bzw. des Gehäuse-Buchsenteils (7') bildet, während die andere Längsseite offen ist, um die Aufnahme des flexiblen Elementes (3) in dem Gehäuse (4) zu ermöglichen, zwei einander gegenüberliegende und zueinander parallele laterale Führungs- und Gleit-Seiten, die sich parallel zur Längsachse des Gehäuses (4) und unter einem rechten Winkel zu den Längsseiten (12) bzw. (12') erstrecken, und zwei Endseiten unter einem rechten Winkel zu der Achse umfasst, und dass die eine der Endseiten des Gehäuse-Buchsenteils (7') offen ist, derart, dass das Gleiten des Gehäuse-Steckteils (7) in dem Gehäuse-Buchsenteil (7') ermöglicht wird, wobei die Außenfläche jeder lateralen laterale Führungs- und Gleit-Seite (12) des Gehäuse-Steckteils (7) erste Führungs- und Gleiteinrichtungen (8) aufweist, und die Innenfläche jeder lateralen laterale Führungs- und Gleit-Seite (12') des Gehäuse-Buchsenteils (7') zweite Führungs- und Gleiteinrichtungen (9) aufweist, die zum Zusammenwirken mit den entsprechenden ersten Führungs- und Gleiteinrichtungen (8) ausgebildet sind.

5. Vorrichtung nach Anspruch 4, **dadurch gekennzeichnet, dass** die ersten Führungs- und Gleiteinrichtungen (8) aus einer Rippe oder einer Nut bestehen, die in Längsrichtung auf der entsprechenden Außenfläche der lateralen Führungs- und Gleit-Seite (12) des Gehäuse-Steckteil (7) ausgebildet ist, und dass die zweiten Führungs- und Gleiteinrichtungen (9) aus einer Nut oder einer Rippe bestehen, die in Längsrichtung auf der Innenfläche der entsprechenden lateralen Führungs- und Gleit-Seite (12') des Gehäuse-Buchsenteils (7') bestehen.

6. Vorrichtung nach einem der Ansprüche 1 bis 5, **dadurch gekennzeichnet, dass** jedes Befestigungsstück (6) in lösbarer Weise auf dem betreffenden Ende des flexiblen Elementes (3) mit Hilfe von lösbaren Befestigungsmitteln (10) befestigt ist.

7. Vorrichtung nach Anspruch 6, **dadurch gekennzeichnet, dass** jedes hohle Befestigungsstück (6) auf seiner Innenseite durch eine Wand begrenzt ist, die zumindest seitlich das betreffende Ende des flexiblen Elementes (3) in dem Letzteren festhält, und dass die lösbaren Befestigungsmittel dieses Endes in dem entsprechenden Befestigungsstück (6) für jede Befestigungsstück (6) aus zumindest einer Schraube (10) und zumindest einer Öffnung (11) bestehen, die die Wand des entsprechenden Befestigungsstückes (6) derart durchquert, dass jede Schraube (10) in die Öffnung (1) oder eine der Öffnungen (11) des entsprechenden Befestigungsstückes (6) einschraubbar ist und über ihr freies Ende einen Anpressdruck und/oder eine Blockierung gegen eine Zugkraft des flexiblen Elementes (3) gegen die äußere Oberfläche des betreffenden Endes des flexiblen Elementes (3) bewirkt, das in das entsprechende Befestigungsstück (6) eingesetzt oder eingeklemmt ist.

8. Vorrichtung nach Anspruch 7, **dadurch gekennzeichnet, dass** jedes Befestigungsstück einerseits allgemein die Form einer langgestreckten Halbschale aufweist, die an zumindest einer ihrer Enden offen ist, um den Durchgang des flexiblen Elementes (3) zu ermöglichen, und eine längs gerichtete Aufnahmeöffnung (13) aufweist, die das Einsetzen oder Einklemmen, zumindest in einer Transversalrichtung, eines der Enden des flexiblen Elementes (3) in das entsprechende Befestigungsstück (6) ermöglicht.

9. Vorrichtung nach Anspruch 8, **dadurch gekennzeichnet, dass** jedes Befestigungsstück (6) weiterhin Vorpositionier-Einrichtungen (14), die im Wesentlichen eine Vorpositionierung des entsprechenden Endes des flexiblen Elementes (3) in dem betreffenden Befestigungsstück (6) ermöglichen, und/oder lösbare Blockiereinrichtungen (10) und/oder (15) umfasst, die ein Blockieren des entsprechenden Endes des flexiblen Elementes (6) gegen eine Zugkraft ermöglichen.

10. Vorrichtung nach Anspruch 9, **dadurch gekennzeichnet, dass** das flexible Element eine Schraubenfeder (3) oder gegebenenfalls ein Wellschlauch ist, d. h. ein Schlauch, der eine spiralförmig gewellte Außenoberfläche (3'), gegebenenfalls ringförmig gewellte Oberfläche aufweist, und dass die Innenwand jedes Befestigungsstückes (6) zumindest teilweise eine Einprägung (14) aufweist, die komplementär zu der spiralförmig oder ringförmig gewellten Außenoberfläche (3') des flexiblen Elementes (3) ist und im eingesetzten Zustand mit der Außenoberfläche (3') derart zusammenwirken kann, dass im Wesentlichen eine Vorpositionierung des entsprechenden Endes des flexiblen Elementes (3) in dem betreffenden Befestigungsstück (6) und gegebenenfalls eine Verstärkung der Halterung mit einer Blockierung gegen eine Zugkraft des flexiblen Elementes (3) in dem Befestigungsstück (6) bewirkt wird.

11. Vorrichtung nach 10, **dadurch gekennzeichnet, dass** das Ende der oder jeder Schraube (10) dadurch, dass sie beispielsweise eine Spitze bildet, in der Lage ist, beim Einschrauben in die Öffnung (11) oder in die eine der Öffnungen (11) des betreffenden Befestigungsstückes (6) zwischen zwei Windungen der spiralförmigen Außenoberfläche (3') des entsprechenden Endes dieser Feder (3) oder gegebenenfalls zwischen zwei Ringe der äußeren ringförmig gewellten Oberfläche des entsprechenden Endes des Wellschlauches einzudringen, die bzw. der zu diesem Zweck in dem entsprechenden Befestigungsstück (6) vorpositioniert wurde, wodurch das Festhalten und die Blockierung gegen eine Zugkraft des entsprechenden Endes des flexiblen Elementes (3) in dem betreffenden Befestigungsstück (6) bewirkt wird.

12. Vorrichtung nach einem der Ansprüche 10 bis 11, **dadurch gekennzeichnet, dass** die Schraubenfeder (3) durch einen Metalldraht gebildet ist, der schraubenlinienförmig aufgerollt ist und an jedem der Enden der Windung in einem Endteil (15) oder einem gebogenen Hakenteil endet, der vorzugsweise unter einem im Wesentlichen rechten Winkel abgebogen ist und mit einer Öffnung (16) oder einer Aussparung in Eingriff kommen kann, die zu diesem Zweck in der Innenfläche des entsprechenden Befestigungsstückes (6) vorgesehen ist, derart, dass eine Verankerungs- und Blockierungsstelle gegen eine Zugkraft des flexiblen Elementes (3) in dem Befestigungsstück (6) gebildet wird.

## Claims

1. Flexible device for the passage of cables for a door or window comprising at least one opening part (1) mounted pivotably on a frame (2), said device comprising a housing (4) which is able to be installed and fixed into a cavity (5) formed in the frame (2) and a flexible line (3), preferably an anti-crushing or anti-pinching line, for protecting electrical cables which are likely to be housed there, on closing the opening part (1), in said housing (4) installed on one of its open longitudinal sides, said flexible line (3) being inserted or fitted at each of its ends in a hollow securing end piece (6) enabling the securing of said flexible line (3) respectively in the housing (4) and on the opening part (1),
said device being **characterised in that** the housing (4) is formed by two housing parts (7) and (7'), namely a male housing part (7) and a female housing part (7'), capable of being slotted into one another longitudinally and being mounted so as to slide axially relative to the other by means of sliding means (8, 9), so as to be able to adjust the length of the housing (4) as a function of the length of the flexible line (3) to be accommodated.

2. Device according to claim 1, **characterised in that** the flexible line (3) is fixed in the housing (4) in the male housing part (7), preferably close to one of its ends.

3. Device according to any one of claims 1 to 2, **characterised in that** the flexible line consists either of a helical spring (3) or a tubular sheath, preferably corrugated on its external surface, that is made of metal or plastic material.

4. Device according to any one of claims 1 to 3, **characterised in that** each male housing part (7), or female part respectively (7'), has overall a rectangular parallelepiped form comprising two longitudinal sides opposite and parallel to one another, one of which is closed and forms the base of the male housing part (7) or female part respectively (7'), and the other is open to enable the accommodation of the flexible line (3) in the housing (4), two guiding and sliding lateral sides opposite one another and parallel to one another extending parallel to the longitudinal axis of the housing (4) and perpendicular to said longitudinal sides (12), respectively (12'), and two end sides perpendicular to said axis and **in that** one of the end sides of the female housing part (7') is open so as to enable the sliding of the male housing part (7) into the female housing part (7'), the external face of each lateral guiding and sliding side (12) of the male housing part (7) comprising the first guiding and sliding means (8) and the internal face of each lateral guiding and sliding side (12') of the female housing part (7') comprising second guiding and sliding means (9) able to cooperate with said corresponding first guiding and sliding means (8).

5. Device according to claim 4, **characterised in that** the first guiding and sliding means (8) consist of a rib, if necessary a groove, formed longitudinally in the external face of the corresponding lateral guiding and sliding side (12) of the male housing part (7), and **in that** the second guiding and sliding means (9) consist of a groove, if necessary a rib, formed longitudinally in the internal face of the corresponding lateral guiding and sliding side (12') of the female housing part (7').

6. Device according to any one of claims 1 to 5, **characterised in that** each end piece (6) is mounted in a detachable manner on the relevant end of the flexible line (3) by detachable securing means (10).

7. Device, according to claim 6, **characterised in that** each hollow end piece (6) is delimited internally by a wall retaining at least laterally the relevant end of the flexible line (3) in the latter and **in that** the detachable securing means of said end in the corresponding end piece (6) consists, for each end piece (6), of at least one screw (10) and at least one opening (11) traversing the wall of the corresponding end piece (6) such that each screw (10) is able to be screwed into the opening (11) or one of the openings (11) of the corresponding end piece (6) by producing, via its free end, a clamping pressure and/or traction locking of the flexible line (3) against the external surface of the relevant end of the flexible line (3) that is inserted or fitted into the corresponding end piece (6).

8. Device according to claim 7, **characterised in that** each end piece (6) has the overall form of an elongated half shell open at at least one end to enable the passage of the flexible line (3) and comprising a longitudinal receiving opening (13) for inserting or fitting, at least in transverse direction, one of the ends of the flexible line (3) into the corresponding end piece (6).

9. Device according to claim 8, **characterised in that** each end piece (6) also comprises prepositioning means (14) which make it possible essentially to preposition the corresponding end of the flexible line (3) in the end piece (6) concerned and/or comprises locking means (10) and/or (15) detachable means making it possible to secure with traction locking the corresponding end of the flexible line (3) in the end piece (6) concerned.

10. Device according to claim 9, **characterised in that** the flexible line is a helical spring (3) or, if necessary, a corrugated tubular sheath, i.e. having an external spiral surface (3'), if necessary corrugated, and **in that** the internal wall of each securing end piece (6) comprises, at least partly, an imprint (14) which is complementary to the external, spiral or corrugated surface (3') of the flexible line (3), which is able to cooperate in the inserted state with said external surface (3') so as to enable essentially the prepositioning of the corresponding end of the flexible line (3) in the relevant end piece (6) and possibly reinforce the securing with traction locking of the flexible line (3) in said end piece (6).

11. Device according to claim 10, **characterised in that** the end of the screw or each screw (10), is capable, for example by forming a point, of being inserted on screwing into the opening (11) or one of the openings (11) of the end piece (6) concerned, between two turns of the external spiral surface (3') of the corresponding end of said spring (3), if necessary between two rings of the corrugated external surface of the corresponding end of the said corrugated tubular sheath, which is prepositioned for this purpose in the corresponding end piece (6), resulting in the securing with traction locking of the corresponding end of the flexible line (3) in the end piece (6) concerned.

12. Device according to any one of claims 10 to 11, **characterised in that** the helical spring (3) is formed by a metal wire wound into a helical line and terminated at each of the winding ends by an end piece of wire (15), or attachment end, which is bent preferably at a right angle and is able to engage and hook into an opening (16) or notch formed for this purpose in the internal face of the corresponding end piece (6), so as to form a hooking and traction locking point of the flexible line (3) in said end piece (6).
